# EUROPÄISCHE PATENTSCHRIFT

(11) **EP 3 893 209 B1**
(45) Veröffentlichungstag und Bekanntmachung des Hinweises auf die Patenterteilung: **27.11.2024**
(21) Anmeldenummer: 21165091.6
(22) Anmeldetag: 26.03.2021
(51) Int. Cl.: G07F 17/00, G07F 11/16, B65G 1/04

(54) **AUTOMATISCHES LAGER ZUR LAGERUNG VON GEGENSTÄNDEN**
AUTOMATIC STORAGE FOR STORING ARTICLES
ENTREPÔT AUTOMATIQUE DESTINÉ AU STOCKAGE DES OBJETS

(30) Priorität: 08.04.2020 DE 102020109881
(43) Veröffentlichungstag der Anmeldung: 13.10.2021
(73) Patentinhaber: Gebr. Willach GmbH, 53809 Ruppichteroth (DE)
(72) Erfinder: Willach, Jens, 53783 Eitorf (DE); Schmidt, Klaus-Dieter, 51588 Nümbrecht (DE)
(74) Vertreter: dompatent von Kreisler Selting Werner - Partnerschaft von Patent- und Rechtsanwälten mbB

(56) Entgegenhaltungen:
- EP-A1- 2 704 111
- EP-B1- 1 023 704
- US-A1- 2010 243 666
- US-A1- 2015 363 993

## Beschreibung

Die vorliegende Erfindung betrifft ein automatisches Lager zur Lagerung von Gegenständen.

Automatische Lager werden beispielsweise als Warenlager, beispielsweise in Apotheken zur Lagerung von Medikamentenpackungen, verwendet.

Automatische Lager weisen zumeist einen Lagerbereich mit mehreren Lagerplätzen für die Gegenstände auf, wobei die Lagerplätze zur Einlagerung und Entnahme der Gegenstände von einem Manipulator bedienbar sind, wobei der Lagerbereich zumindest teilweise von Gehäusewänden umgeben ist, wobei vorzugsweise in mindestens einer der Gehäusewände eine Zugangstür angeordnet ist, und wobei in einer der Gehäusewände oder in der Zugangstür eine Ausgabeöffnung angeordnet ist. Ein derartiges automatisches Lager ist der Anmelderin allgemein bekannt, ohne dass hierzu ein konkret benennbarer Stand der Technik existiert. EP 2 704 111 A1 offenbart ein automatisches Lager zur Lagerung von Gegenständen in Form eines Verkaufsautomaten mit den Merkmalen des Oberbegriffs von Anspruch 1.

Da die Manipulatoren im Bereich der Lagerplätze mit hoher Geschwindigkeit bewegt werden, ist es grundsätzlich notwendig, dass die Ausgabeöffnung verschlossen ist, sodass während des Betriebs des Manipulators ein Zugriff in den Lagerbereich von außen nicht möglich ist, sodass durch den Manipulator hervorgerufene Verletzungen bei dem Bediener vermieden werden.

Da die Gegenstände durch die Ausgabeöffnung mittels des Manipulators automatisch ausgegeben werden sollen, besteht daher die Schwierigkeit, eine zuverlässige Ausgabe zu gewährleisten, ohne dass die Gegenstände in der Ausgabeöffnung stecken bleiben.

Es ist daher die Aufgabe der vorliegenden Erfindung, ein automatisches Lager zur Lagerung von Gegenständen zu schaffen, bei dem eine zuverlässige Ausgabe der Gegenstände durch eine Ausgabeöffnung gewährleistet ist und gleichzeitig für den Bediener eine hohe Sicherheit gegeben ist.

Das erfindungsgemäße automatische Lager ist definiert durch die Merkmale des Anspruchs 1.

Bei dem erfindungsgemäßen automatischen Lager zur Lagerung von Gegenständen ist ein Lagerbereich mit mehreren Lagerplätzen für die Gegenstände vorgesehen, wobei die Lagerplätze zur Einlagerung und Entnahme der Gegenstände von einem Manipulator oder zur Entnahme der Gegenstände von einem Manipulator bedienbar sind, wobei der Lagerbereich zumindest teilweise von Gehäusewänden umgeben ist, wobei vorzugweise in mindestens einer der Gehäusewände eine Zugangstür angeordnet ist, und wobei in einer der Gehäusewände oder in der Zugangstür eine Ausgabeöffnung angeordnet ist. Die Erfindung ist dadurch gekennzeichnet, dass an der Ausgabeöffnung eine Verschlussklappe angeordnet ist, die in einer Schließstellung die Ausgabeöffnung verschließt und in einer Öffnungsstellung mit einer oberen Kante zu einer Endposition des Manipulators ausgerichtet ist.

Über die Verschlussklappe lässt sich die Ausgabeöffnung in vorteilhafter Weise verschließen. Dadurch, dass in einer Öffnungsstellung die Verschlussklappe mit einer oberen Kante zu einer Endposition des Manipulators ausgerichtet ist, kann auf vorteilhafte Weise eine Übergabe eines Gegenstandes von dem Manipulator zu der Ausgabeöffnung erfolgen, indem der Manipulator den Gegenstand an seiner Endposition abgibt, sodass dieser auf die Verschlussklappe fällt. Dadurch, dass die Verschlussklappe in der Öffnungsstellung mit der oberen Kante zur der Endposition des Manipulators ausgerichtet ist, kann in vorteilhafter Weise sichergestellt werden, dass der Gegenstand an die Verschlussklappe übergeben wird. Der Gegenstand kann nun entweder durch die Ausgabeöffnung von der Verschlussklappe entnommen werden oder über die Verschlussklappe zu der Ausgabeöffnung rutschen. Das Rutschen des Gegenstandes über die Verschlussklappe kann in der Öffnungsstellung erfolgen oder es erfolgt eine zusätzliche Bewegung der Verschlussklappe, die die Rutschbewegung hervorruft.

Das erfindungsgemäße automatische Lager kann insbesondere ein automatisches Lager für Apotheken sein, wobei die Gegenstände Medikamentenverpackungen sein können, wie beispielsweise Medikamentenpackungen, Flaschen oder andere Behälter.

Beim erfindungsgemäßen automatischen Lager kann insbesondere eine Zugangstür vorgesehen sein, um den Lagerbereich von außen betreten zu können, um beispielsweise Wartungs- oder Reinigungsaufgaben durchzuführen.

Die Ausgabeöffnung des erfindungsgemäßen automatischen Lagers kann grundsätzlich die Hauptentnahmeöffnung sein. In einem bevorzugten alternativen Ausführungsbeispiel ist vorgesehen, dass das automatische Lager eine Hauptentnahmeöffnung oder mehrere Hauptentnahmeöffnungen aufweist, durch die die Gegenstände im normalen Betrieb aus dem automatischen Lager ausgelagert und einem oder mehreren Ausgabebereichen, wie beispielsweise Kassenbereichen in Apotheken, zugeführt werden. Durch die zusätzlich zu der Hauptentnahmeöffnung vorgesehenen Ausgabeöffnung kann eine Sonderfunktion erbracht werden und beispielsweise fehlgelagerte oder beispielsweise beschädigte oder nicht mehr verwendbare Gegenstände ausgelagert werden. Auch können durch die Ausgabeöffnung beispielsweise größere Mengen der Gegenstände, die zum Beispiel versendet werden sollen, ausgelagert werden. In einem Ausführungsbeispiel, in dem das automatische Lager ein automatisches Lager für Apotheken ist, kann die Ausgabeöffnung beispielsweise in einen Lagerbereich führen, der von dem Verkaufsbereich der Apotheke getrennt ist. In dem Lagerbereich kann beispielsweise der Versand von Gegenständen vorbereitet werden, die zuvor durch die Ausgabeöffnung ausgelagert wurden. Das automatische Lager kann beispielsweise auch eine automatische oder halb-automatische Einlagerung vorsehen, die eine Einlagerungsöffnung in einer der Gehäusewände oder in der Zugangstür aufweist. Dabei kann vorgesehen sein, dass die Ausgabeöffnung sich im Nahbereich zu der Einlagerungsöffnung befindet, beispielsweise direkt neben dieser und zum Beispiel lediglich in einem geringen Abstand zu der Eingabeöffnung, wobei der Abstand beispielsweise maximal 1 m, vorzugsweise maximal 50 cm beträgt. Dadurch können bei einem Einlagerungsvorgang fehlgelagerte Gegenstände oder Gegenstände, für die kein Lagerplatz vorhanden ist, durch die Ausgabeöffnung ausgegeben werden und in vorteilhafter Weise von dem Bediener ohne großen Aufwand zu einem späteren Zeitpunkt direkt wieder durch die Einlagerungsöffnung eingelagert werden.

Es kann vorgesehen sein, dass unterhalb der Ausgabeöffnung eine Auffangvorrichtung angeordnet ist, die durch die Ausgabeöffnung ausgegebene Gegenstände auffängt.

Vorzugsweise ist vorgesehen, dass eine Schlossvorrichtung mit einem Riegel an der Verschlussklappe angeordnet ist, wobei die Verschlussklappe in der Schließstellung über die Schlossvorrichtung verriegelbar ist. Dadurch kann in vorteilhafter Weise sichergestellt werden, dass die Verschlussklappe in der Schließstellung derart verriegelt ist, dass ein versehentliches Öffnen der Verschlussklappe nicht möglich ist, sodass sichergestellt ist, dass während der Bewegung des Manipulators kein Zugriff in den Lagerbereich von außen möglich ist.

Die Schlossvorrichtung kann manuell betätigt sein oder eine Antriebsvorrichtung aufweisen, sodass die Schlossvorrichtung automatisch betätigbar ist.

In einer bevorzugten Ausführungsform der Erfindung ist vorgesehen, dass die Verschlussklappe über eine Drehlagerung verschwenkbar gelagert ist. Auf diese Weise ist eine Klappbewegung der Verschlussklappe in vorteilhafter Weise möglich.

Dabei kann vorgesehen sein, dass eine Drehachse der Drehlagerung parallel zu einer unteren Kante der Verschlussklappe angeordnet ist. Dadurch wird sichergestellt, dass die Verschwenkbewegung der Drehlagerung parallel zu der unteren Kante der Verschlussklappe erfolgt, wodurch eine vorteilhafte Klappbewegung der Verschlussklappe hervorgerufen wird. Ferner kann vorgesehen sein, dass die Drehachse und/oder die untere Kante der Verschlussklappe parallel zu dem unteren Rand der Ausgabeöffnung angeordnet sind.

Vorzugsweise ist vorgesehen, dass die Drehlagerung ein federbelastetes Scharnier aufweist, wobei die Verschlussklappe entgegen einer Federkraft einer Feder des federbelasteten Scharniers in die Öffnungsstellung bewegbar ist.

Durch das Vorsehen eines federbelasteten Scharniers wird erreicht, dass die Verschlussklappe mittels der Federkraft aus der Öffnungsstellung in die Schließstellung bewegt wird. Die Verschlussklappe muss daher lediglich für die Bewegung aus der Schließstellung in die Öffnungsstellung angetrieben werden. Die Bewegung aus der Öffnungsstellung in die Schließstellung erfolgt über die Federkraft des federbelasteten Scharniers.

Vorzugsweise ist vorgesehen, dass eine Antriebsvorrichtung die Verschlussklappe von der Schließstellung in die Öffnungsstellung bewegt. Die Antriebsvorrichtung kann dabei die Verschlussklappe manuell antreiben oder es kann ein motorbetriebener Antrieb vorgesehen sein,

Dabei kann vorgesehen sein, dass die Antriebsvorrichtung über ein Zugmittel mit der Verschlussklappe verbunden ist. Die für eine Verschlussklappe typische Klappbewegung zum Öffnen kann in vorteilhafter Weise über ein Zugmittel hervorgerufen werden, wobei die Konstruktion der Antriebsvorrichtung durch die Verwendung des Zugmittels einfach gehalten werden kann. Als Zugmittel kann beispielsweise eine Kette oder Stange verwendet werden. Das Zugmittel kann auch mehrteilig ausgebildet sein und beispielsweise eine Kette und eine Stange aufweisen.

Vorzugsweise ist vorgesehen, dass an der Verschlussklappe ein erster Hebel angeordnet ist, an dem das Zugmittel angreift, wobei der erste Hebel verschwenkbar gelagert ist und eine Anschlagvorrichtung aufweist.

Bei einem Öffnungsvorgang der Verschlussklappe kann somit vorgesehen sein, dass die Antriebsvorrichtung über das Zugmittel zunächst den ersten Hebel verschwenkt, bis dieser an die Anschlagvorrichtung anschlägt, bevor dann die Antriebskraft der Antriebsvorrichtung über den ersten Hebel auf die Verschlussklappe übertragen wird und somit diese bewegt. Dadurch kann erreicht werden, dass die Antriebsvorrichtung, die beispielsweise an der Innenseite der Zugangstür angeordnet ist, einen relativ geringen Bauraum einnehmen kann, da beispielsweise in einer Grundstellung der erste Hebel gering abstehend an der Verschlussklappe anliegen kann oder parallel zu dieser verlaufen kann. Während des Öffnungsvorgangs wird der Hebel ausgeschwenkt, wobei nach dem Anschlagen des Hebels an der Anschlagvorrichtung die Hebelwirkung des Hebels genutzt werden kann, um die Kraft auf die Verschlussklappe zum Öffnen der Verschlussklappe aufzubringen.

Vorzugweise ist vorgesehen, dass der erste Hebel den Riegel betätigt. Es kann somit vorgesehen sein, dass bei dem Öffnungsvorgang der erste Hebel bei seiner Verschwenkbewegung zunächst den Riegel betätigt, sodass die Verschlussklappe entriegelt wird. Nach Anschlag des ersten Hebels an der Anschlagvorrichtung ist dann die Verschlussklappe entriegelt, sodass der Öffnungsvorgang der Verschlussklappe erfolgen kann. Der Riegel kann beispielsweise federbelastet sein, sodass der Riegel entgegen einer Federkraft entriegelt wird.

In einer besonders bevorzugten Ausführungsform ist vorgesehen, dass der erste Hebel als Winkelhebel mit zwei Hebelarmen ausgebildet ist, wobei an einem der Hebelarme der Riegel gebildet ist und der andere Hebelarm an die Anschlagvorrichtung anschlägt. Dabei kann vorgehsehen sein, dass das Zugmittel an dem Hebelarm, an dem der Riegel gebildet ist, angreift.

Vorzugsweise ist vorgesehen, dass die Antriebsvorrichtung einen Antriebshebel rotatorisch antreibt, wobei das Zugmittel mit dem Antriebshebel verbunden ist.

Das Zugmittel kann grundsätzlich auch mehrteilig ausgebildet sein. Beispielsweise kann vorgesehen sein, dass die Antriebsvorrichtung einen zweiarmigen Antriebshebel betätigt, wobei die Antriebsvorrichtung an einen Hebelarm des Antriebshebels angreift und das Zugmittel an dem anderen Hebelarm angebracht ist. Insbesondere kann vorgesehen sein, dass die Drehachse des Antriebshebels orthogonal zu der Drehachse des an der Verschlussklappe angeordneten Hebels angeordnet ist.

Auch kann vorgesehen sein, dass das Zugmittel zumindest teilweise aus einem Stangengetriebe an der Verschlussklappe gebildet ist, wobei ein zu dem ersten Hebel paralleler zweiter Hebel an der Verschlussklappe angeordnet ist und eine Getriebestange den ersten Hebel mit dem zweiten Hebel verbindet. An dem zweiten Hebel kann dann ein weiterer Teil des Zugmittels, beispielsweise eine Kette, angreifen, die mit der Antriebsvorrichtung verbunden ist.

Vorzugsweise ist vorgesehen, dass eine Federeinrichtung mit dem ersten Hebel verbunden ist, wobei der erste Hebel entgegen der Federkraft der Federeinrichtung bewegbar ist. Über die Federeinrichtung kann somit der erste Hebel in vorteilhafter Weise in seine Grundposition bewegt werden. In einer Ausführungsform, bei der der Riegel durch den ersten Hebel gebildet ist, wird somit sichergestellt, dass der Riegel durch die Federkraft der Federeinrichtung in die Verriegelungsposition bewegt wird.

In einer besonders bevorzugten Ausführungsform der Erfindung ist vorgesehen, dass die Verschlussklappe zumindest teilweise aus einer Glasplatte gebildet ist. Die Glasplatte kann insbesondere an der Außenseite der Verschlussklappe angeordnet sein, sodass diese von außen sichtbar ist. Die Glasplatte hat den besonderen Vorteil, dass diese eine vergleichsweise rutschige Oberfläche aufweist, sodass in der Öffnungsstellung auf der Verschlussklappe abgelegte Gegenstände in vorteilhafter Weise auf der Verschlussklappe rutschen können. Dabei bietet die Glasplatte den Vorteil, dass diese abriebfest und einfach zu reinigen ist. Insbesondere kann vorgesehen sein, dass die Verschlussklappe nach innen klappt, sodass dann die Gegenstände auf der Außenseite der Verschlussklappe rutschen können. Es kann beispielsweise vorgesehen sein, dass die Verschlussklappe aus einem Metallrahmen besteht, auf dem die Glasplatte befestigt ist. Der erste Hebel und die Zugmittel können daher an dem Metallrahmen angreifen, sodass eine Beschädigung der Glasplatte vermieden wird. Selbstverständlich kann anstelle einer Glasplatte auch eine Platte aus einem anderen Material verwendet werden. Die Glasplatte kann beispielsweise aus einem Milchglas oder einem hinterlackierten Glas bestehen.

Vorzugsweise ist vorgesehen, dass eine Sensorvorrichtung die Öffnungsstellung oder die Schließstellung der Verschlussklappe sensiert. Die so ermittelten Signale können die Position der Verschlussklappe somit an eine Steuerungsvorrichtung weitergeben, sodass beispielsweise in der Öffnungsstellung der Verschlussklappe eine Bewegung des Manipulators verhindert wird.

Im Folgenden wird unter Bezugnahme auf die nachfolgenden Figuren die Erfindung näher erläutert. Es zeigen
- Figur 1: eine schematische Gesamtansicht eines erfindungsgemäßen automatischen Lagers,
- Figur 2: eine Teilansicht des erfindungsgemäßen Lagers bei geöffneter Zugangstür,
- Figur 3: eine Teilansicht der Zugangstür von innen mit geöffneter Verschlussklappe,
- Figur 4: eine andere Ansicht der Öffnungsstellung der Verschlussklappe mit Manipulator in seiner Endstellung und
- Figuren 5a-c: verschiedene Positionen des oberen Bereichs der Verschlussklappe mit der Schlossvorrichtung.

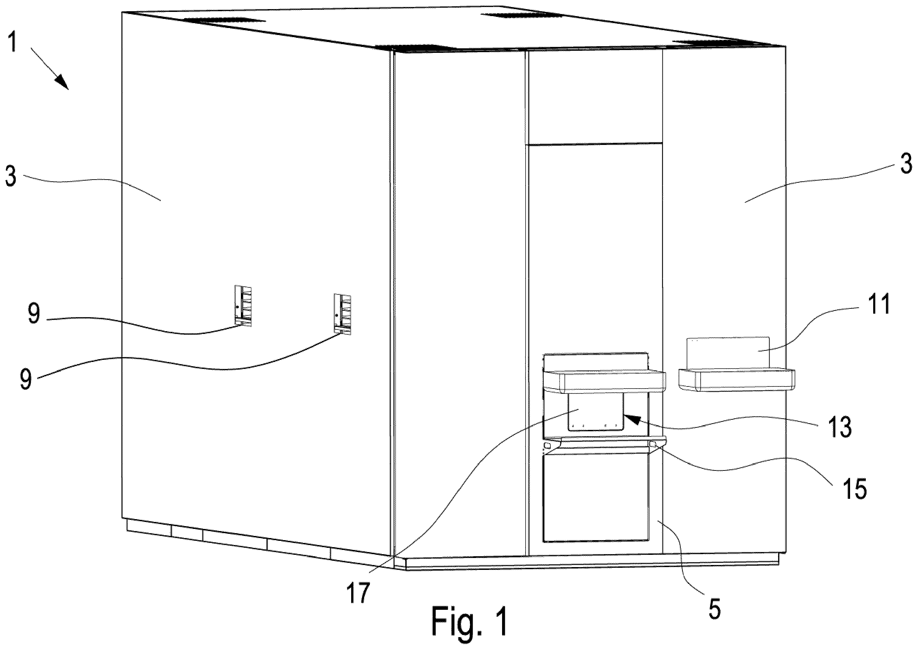

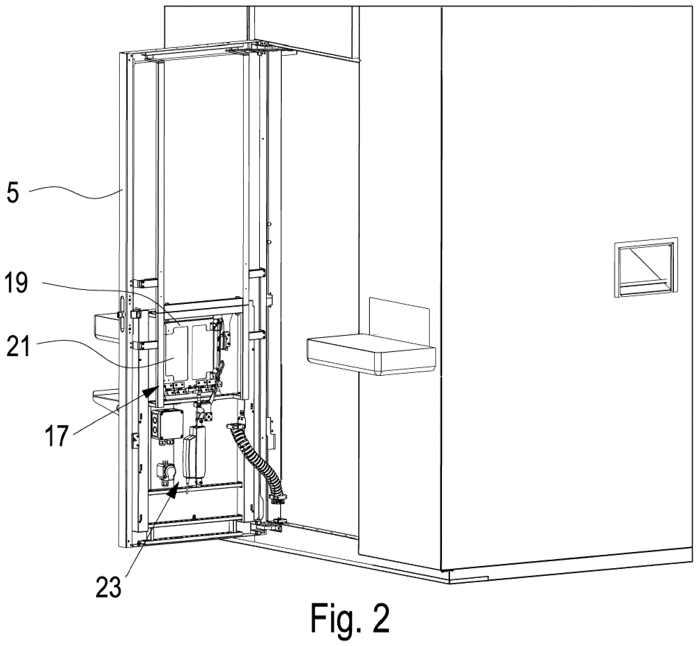

In Figuren 1 und 2 ist ein automatisches Lager 1 schematisch in einer Perspektivdarstellung gezeigt.

Das automatische Lager 1 dient zur Lagerung von Gegenständen, wie beispielsweise Medikamentenverpackungen.

Ein Lagerbereich mit mehreren Lagerplätzen ist von Gehäusewänden 3 umgeben. In einem Frontbereich ist in einer der Gehäusewände eine Zugangstür 5 angeordnet. Über die Zugangstür 5 ist ein Zutritt in den Lagerbereich möglich, wie aus Figur 2 hervorgeht. Ein Bediener kann somit den Lagerbereich betreten, um beispielsweise Wartungs- oder Reinigungsaufgaben wahrzunehmen.

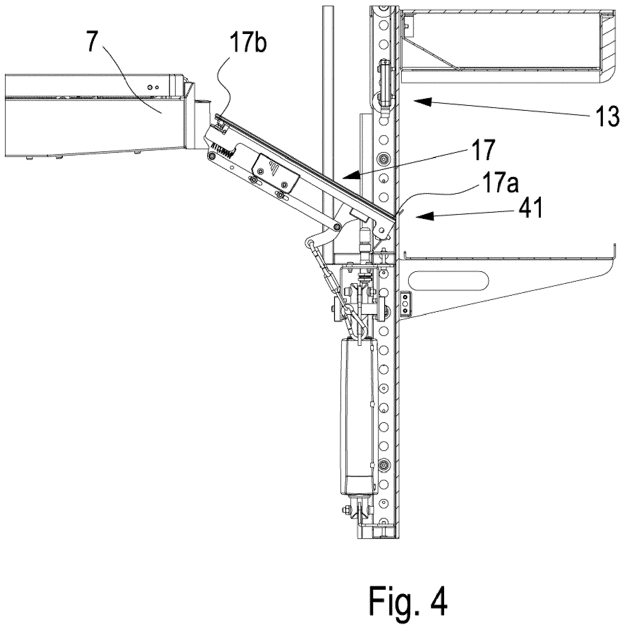

Die Lagerplätze werden über einen Manipulator 7, der in Figur 4 dargestellt ist, bedient, sodass die Gegenstände mittels des Manipulators 7 auf die Lagerplätze eingelagert oder von diesen entnommen werden können.

In einer der Gehäusewände sind Entnahmeöffnungen 9 angeordnet, durch die der Manipulator 7 im normalen Gebrauch zu entnehmende Gegenstände auslagert. Diese können beispielsweise Kassenbereichen einer Apotheke zugeführt werden.

Ferner weist das automatische Lager 1 eine Einlagerungsöffnung 11 auf, durch die die Gegenstände in das automatische Lager eingelagert werden können.

In der Zugangstür 5 ist ferner eine Ausgabeöffnung 13 angeordnet. Die Zugangstür 5 und somit die Ausgabeöffnung 13 ist neben der Einlagerungsöffnung 11 angeordnet. Durch die Ausgabeöffnung 13 können fehlgelagerte oder beispielsweise beschädigte, nicht mehr verwendbare oder aus einem anderen Grund auszulagernde Gegenstände ausgegeben werden. Da ein Bediener des automatischen Lagers 1 sich im Wesentlichen im Bereich der Einlagerungsöffnung 11 aufhält, um Gegenstände einzulagern, kann dieser bequem und ohne zusätzliche Wege auch die Ausgabeöffnung bedienen, um beispielsweise durch diese Gegenstände, die versendet werden sollen, auszulagern.

Dazu ist an der Zugangstür 5 unterhalb der Ausgabeöffnung 13 eine Auffangvorrichtung 15 angeordnet.

Um zu verhindern, dass der Bediener durch die Ausgabeöffnung 13 während des Betriebs des automatischen Lagers in den Lagerbereich und somit in den Verfahrbereich des Manipulators 7 greifen kann, ist die Ausgabeöffnung 13 mit einer Verschlussklappe 17 verschlossen.

Die Verschlussklappe 17 besteht aus einem Rahmen 19, an dem eine Glasplatte 21 angeordnet ist. In der Schließstellung der Verschlussklappe 17, die in Figuren 1 und 2 dargestellt ist, schließt die Glasplatte 21 bündig mit dem die Ausgabeöffnung 13 umgebenden Bereich der Zugangstür 5 ab, sodass ein gleichmäßiges Erscheinungsbild des automatischen Lagers 1 von außen geschaffen wird.

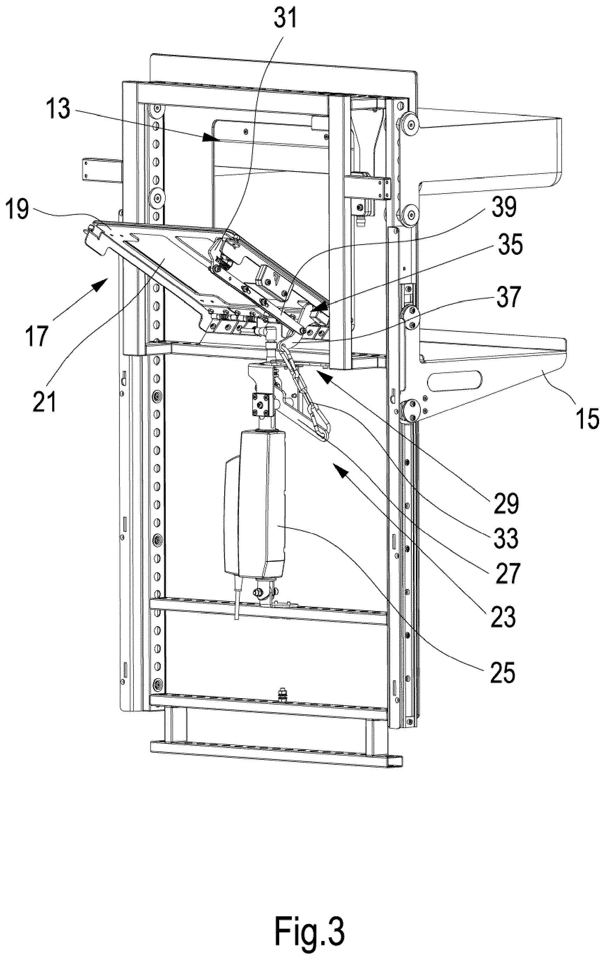

Die Verschlussklappe 17 ist über eine Antriebsvorrichtung 23 bedienbar und kann mittels der Antriebsvorrichtung 23 in die in Figur 3 dargestellte Öffnungsstellung geklappt werden. In Figur 3 ist ein Teilabschnitt der Zugangstür 5 von der Innenseite gezeigt. Die Antriebsvorrichtung 23 hat die Verschlussklappe 17 in eine Öffnungsstellung gezogen. Die Antriebsvorrichtung besteht aus einem Antriebsmotor 25, der einen Antriebshebel 27 betätig. Der Antriebshebel 27 ist über ein Zugmittel 29 mit einem ersten Hebel 31 verbunden. Das Zugmittel 29 besteht aus einer Kette 33 und einem Stangengetriebe 35. Die Kette 33 verbindet den Antriebshebel 27 mit einem zweiten Hebel 37 des Stangengetriebes 35. Über den zweiten Hebel 37 wird die Zugkraft mittels einer Zugstange 39 auf den ersten Hebel 31 übertragen.

Die Konstruktion der Antriebsvorrichtung 23 des erfindungsgemäßen automatischen Lagers 1 hat den Vorteil, dass dieses in der Schließstellung der Verschlussklappe 17, wie aus Figur 2 hervorgeht, nur geringfügig von der Rückseite der Zugangstür 5 absteht, sodass ein Bediener, der durch die geöffnete Zugangstür 5 in den Lagerbereich tritt, wobei die Verschlussklappe 17 geschlossen ist, nicht Gefahr läuft, an Teilen der Antriebsvorrichtung 23 hängenzubleiben.

Die Verschlussklappe 17 ist über eine Drehlagerung 41 verschwenkbar an dem Türflügel 5 gelagert. Die Drehachse der Drehlagerung verläuft parallel zu einer unteren Kante 17a der Verschlussklappe 17 und weist beispielsweise ein federbelastetes Scharnier auf. Die Verschlussklappe 17 ist entgegen der Federkraft einer Feder des federbelasteten Scharniers in die in Figur 4 dargestellte Öffnungsstellung bewegbar. Dies hat den Vorteil, dass die Verschlussklappe 17 ohne Antrieb durch den Antriebsmotor 25 in die Schließstellung bewegt wird. Dies erfolgt, sobald der Antriebsmotor 25 die Kette 33 entlastet.

Durch das Vorsehen des federbelasteten Scharniers ist darüber hinaus die Verwendung der Zugkette 33 in vorteilhafter Weise möglich, die lediglich Zugkraft und keine Druckkräfte übertragen kann.

In der Öffnungsstellung der Verschlussklappe 17 ist eine obere Kante 17b der Verschlussklappe 17 zu einer Endposition des Manipulators 7 ausgerichtet. Die Verschlussklappe 17 weist in der Öffnungsstellung ein Gefälle auf, sodass ein Gegenstand, der von dem Manipulator transportiert wird, auf der äußeren Fläche der Verschlussklappe 17, die durch die Glasplatte 21 gebildet ist, abgelegt werden kann und über diese Fläche durch die Ausgabeöffnung 13 rutschen kann. Die Glasplatte 21 weist dabei den Vorteil einer für das Gleiten der Gegenstände vorteilhaften Oberfläche auf, wobei die Oberfläche keinen oder nur einen geringen Abrieb hervorruft.

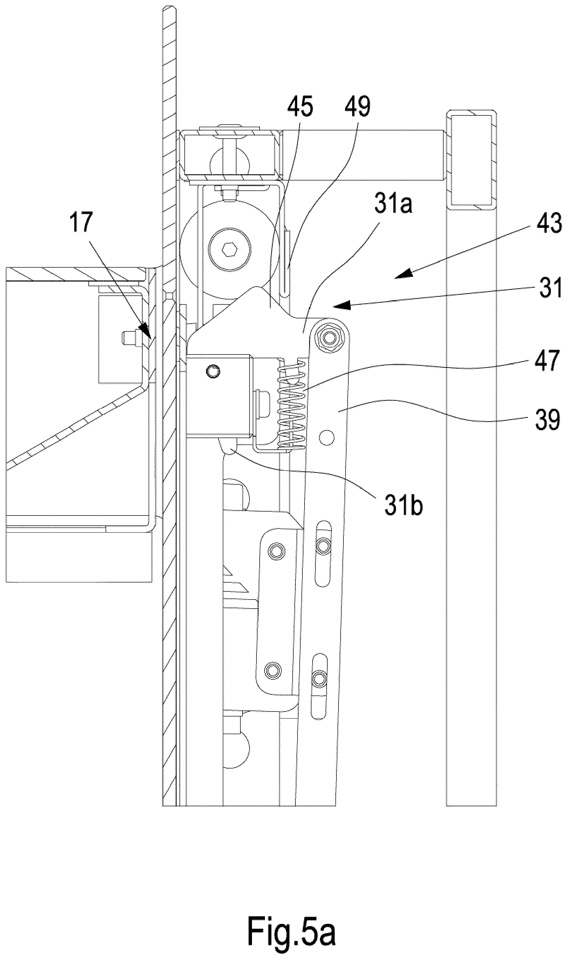

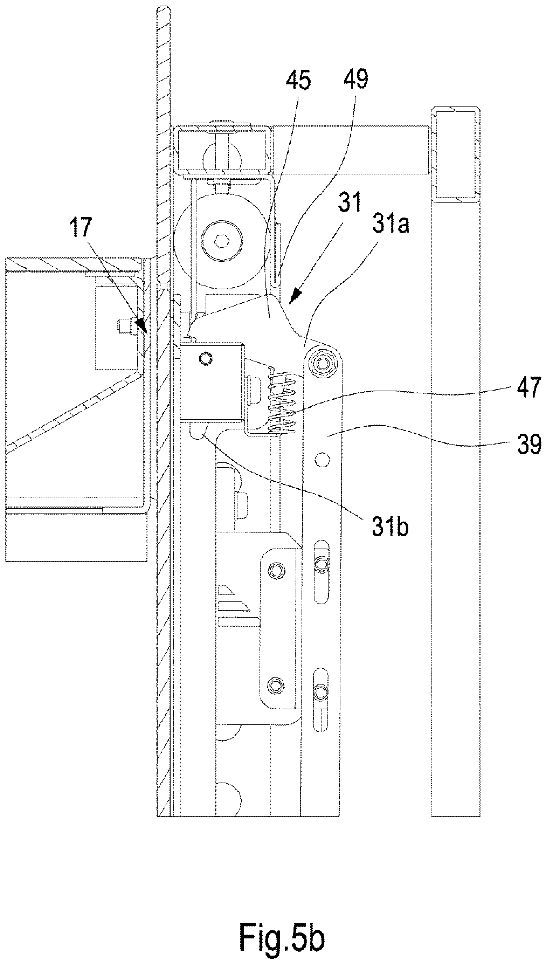

Da die Kette 33 nur auf Zug belastet ist und keine Druckkräfte aufnehmen kann, wird durch die Antriebsvorrichtung 23 keine Blockierfunktion für die Verschlussklappe 17 in ihrer Schließstellung zu Verfügung gestellt. Die Verschlussklappe 17 kann daher eine separate Schlossvorrichtung 43 aufweisen, die in den Figuren 5a-5c in ihrer Funktion dargestellt ist. Die Schlossvorrichtung 43 weist einen Riegel 45 auf, der an dem ersten Hebel 31 angeordnet ist. Der erste Hebel 31 ist als Winkelhebel mit einem ersten Hebelarm 31a und einem zweiten Hebelarm 31b ausgebildet. Der Riegel 45 ist am ersten Hebelarm 31a angeordnet. Der erste Hebel 31 weist ferner eine Feder 47 auf, sodass der Hebel 31 nur entgegen der Federkraft der Feder 47 verschwenkt werden kann. Durch Zug der Zugstange 39 an dem äußeren Ende des ersten Hebelarms 31a wird der erste Hebel 31 verschwenkt, wie aus Figur 5b ersichtlich ist. Dadurch taucht der Riegel 45 unterhalb einer Kante 49 eines Rahmens der Tür 5 ab. In der Schließstellung hindert die Kante 49 ein Öffnen der Verschlussklappe 17, indem der Riegel 45 bei einem Öffnungsversuch gegen die Kante 49 stößt.

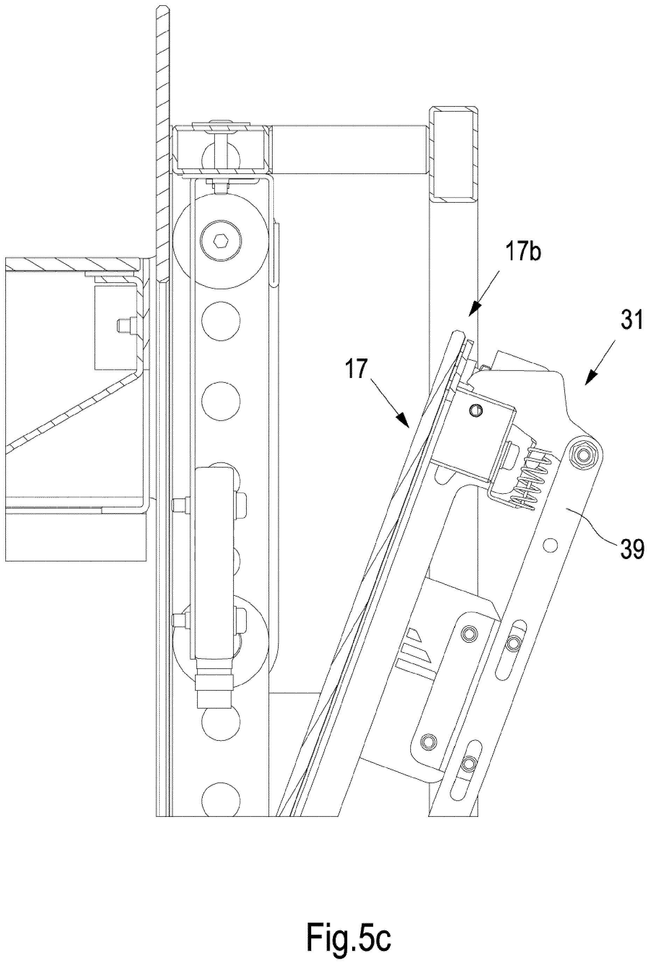

Nach dem Verschwenken um einen vorgegebenen Winkel stößt der zweite Hebelarm 31b an einen Anschlag an. Bis zu dem Anschlagen des zweiten Hebelarms 31b an dem Anschlag wird die Zugkraft der Zugstange 39 ausschließlich für das Verschwenken des ersten Hebels 31 verwendet. Nach dem Anschlagen des zweiten Hebelarms 31b an dem Anschlag wird die Zugkraft über den ersten Hebel 31 auf die Verschlussklappe 17 übertragen, sodass ein Verschwenken der Verschlussklappe 17 in Richtung ihrer Öffnungsposition erfolgt, wie aus Figur 5c ersichtlich ist.

Die Feder 47 bewirkt, dass in der Schließstellung der Verschlussklappe 17 und bei einer Entlastung der Zugstange 39 der erste Hebel 31 in die in Figur 5a dargestellte Ausgangsposition verschwenkt wird, sodass die Schlossvorrichtung 43 in ihrer Abschließposition ist. Dadurch wird sichergestellt, dass bei einem Schließvorgang der Verschlussklappe 17 stets eine Verriegelung durch die Schlossvorrichtung 43 erfolgt.

Da bei dem Verschwenken der Verschlussklappe 17 in die Schließposition das Zugmittel 29 entlastet wird, sodass die Verschlussklappe 17 durch die Federkraft der Federscharniere in die Schließposition gedrückt wird, wird gleichzeitig durch die Feder 47 der Riegel 45 in seine Grundposition bewegt. Daher kann der Riegel 45 bereits vor dem Erreichen der Schließposition der Verschlussklappe 17 in seiner Verriegelungsposition sein, sodass ein Einschnappen des Riegels 45 zum Erreichen der Schließposition der Verschlussklappe 17 erfolgen muss. Dabei muss sichergestellt sein, dass die Federkraft der Federscharniere ausreichend groß ist, um bei der Schließbewegung den Riegel 45 entgegen der Federkraft der Feder 47 während des Einschnappens nach unten zu drücken.

Bei dem erfindungsgemäßen Lager 1 ist eine vorteilhafte Verschlussklappe 17 für die Ausgabeöffnung 13 geschaffen worden, die eine besonders flache Ausgestaltung einer Antriebsvorrichtung 23 aufweist und darüber hinaus die Verschlussklappe die Doppelfunktion des Verschließens der Ausgabeöffnung 13 und der Bildung einer Ausgaberutsche für die Gegenstände in der Öffnungsstellung der Verschlussklappe 17 verwirklicht ist. Darüber hinaus ist in vorteilhafter Weise eine Schlossvorrichtung 43 für die Verschlussklappe 17 gebildet, die einen unerlaubten Zugriff ins Innere des Lagers 1 verhindert. Die Antriebsvorrichtung 23 treibt dabei nicht nur die Verschlussklappe 17 an, sondern bewirkt auch einen Antrieb für die Entriegelung der Schlossvorrichtung 43.

Das Lager 1 kann darüber hinaus eine nicht dargestellte Sensorvorrichtung aufweisen, die die Öffnungsstellung und/oder die Schließstellung der Verschlussklappe 17 sensiert. Beispielsweise können optische Sensoren vorgesehen sein, die die Stellung der Verschlussklappe 17 erfassen. Durch die von der Sensorvorrichtung erzeugten Signale hinsichtlich der Öffnungsstellung oder der Schließstellung ist eine Steuerung des automatischen Lagers 1 in vorteilhafter Weise möglich. Beispielsweise kann bei der Registrierung einer Öffnungsstellung der Verschlussklappe sichergestellt werden, dass der Manipulator 7 nicht angetrieben wird. Bei der Steuerung des erfindungsgemäßen Lagers kann beispielsweise auch vorgesehen sein, dass der Manipulator 7 nur angetrieben wird, wenn die Sensorvorrichtung die Schließstellung der Verschlussklappe 17 sensiert.

### Bezugszeichenliste

- 1: automatisches Lager
- 3: Gehäusewände
- 5: Zugangstür
- 7: Manipulator
- 9: Entnahmeöffnung
- 11: Eingabeöffnung
- 13: Ausgabeöffnung
- 15: Auffangvorrichtung
- 17: Verschlussklappe
- 17a: untere Kante
- 17b: obere Kante
- 19: Rahmen
- 21: Glasplatte
- 23: Antriebsvorrichtung
- 25: Antriebsmotor
- 27: Antriebshebel
- 29: Zugmittel
- 31: erster Hebel
- 31a: erster Hebelarm
- 31b: zweiter Hebelarm
- 33: Zugkette
- 35: Stangengetriebe
- 37: zweiter Hebel
- 39: Zugstange
- 41: Drehlagerung
- 43: Schlossvorrichtung
- 45: Riegel
- 47: Feder
- 49: Kante

## Patentansprüche

1. Automatisches Lager (1) zur Lagerung von Gegenständen,
mit einem Lagerbereich mit mehreren Lagerplätzen für die Gegenstände, wobei die Lagerplätze zur Einlagerung und Entnahme der Gegenstände von einem Manipulator (7) bedienbar oder zur Entnahme der Gegenstände von einem Manipulator (7) bedienbar sind, wobei der Lagerbereich zumindest teilweise von Gehäusewänden (3) umgeben ist, wobei vorzugsweise in mindestens einer der Gehäusewände (3) eine Zugangstür (5) angeordnet ist, wobei in einer der Gehäusewände (3) oder in der Zugangstür (5) eine Ausgabeöffnung (13) angeordnet ist, wobei die Ausgabeöffnung (13) eine Verschlussklappe (17) aufweist, die in einer Schließstellung die Ausgabeöffnung (13) verschließt,
**dadurch gekennzeichnet,**
**dass** die Verschlussklappe (17) in einer Öffnungsstellung mit einer oberen Kante (17b) zu einer Endposition des Manipulators (7) ausgerichtet ist, so dass ein von dem Manipulator (7) an seiner Endposition abgegebener Gegenstand auf die Verschlussklappe (17) fällt, wobei der Gegenstand durch die Ausgabeöffnung (13) von der Verschlussklappe (17) entnehmbar ist oder über die Verschlussklappe (17) zu der Ausgabeöffnung (13) rutscht.

2. Lager nach Anspruch 1, **dadurch gekennzeichnet, dass** eine Schlossvorrichtung (43) mit einem Riegel (45) an der Verschlussklappe (17) angeordnet ist, wobei die Verschlussklappe (17) in der Schließstellung über die Schlossvorrichtung (43) verriegelbar ist.

3. Lager nach Anspruch 1 oder 2, **dadurch gekennzeichnet, dass** die Verschlussklappe (17) über eine Drehlagerung (41) verschwenkbar gelagert ist.

4. Lager nach Anspruch 3, **dadurch gekennzeichnet, dass** eine Drehachse der Drehlagerung (41) parallel zu einer unteren Kante (17a) der Verschlussklappe (17) angeordnet ist.

5. Lager nach Anspruch 3 oder 4, **dadurch gekennzeichnet, dass** die Drehlagerung ein federbelastetes Scharnier aufweist, wobei die Verschlussklappe (17) entgegen einer Federkraft einer Feder des federbelasteten Scharniers in die Öffnungsstellung bewegbar ist.

6. Lager nach einem der Ansprüche 1 bis 5, **dadurch gekennzeichnet, dass** eine Antriebsvorrichtung (23) die Verschlussklappe (17) von der Schließstellung in die Öffnungsstellung bewegt.

7. Lager nach Anspruch 6, **dadurch gekennzeichnet, dass** die Antriebsvorrichtung über ein Zugmittel (29) mit der Verschlussklappe (17) verbunden ist.

8. Lager nach Anspruch 7, **dadurch gekennzeichnet, dass** an der Verschlussklappe (17) ein erster Hebel (31) angeordnet ist, an dem das Zugmittel (29) angreift, wobei der erste Hebel (31) verschwenkbar gelagert ist und eine Anschlagvorrichtung aufweist.

9. Lager nach Anspruch 8, **dadurch gekennzeichnet, dass** der erste Hebel (31) den Riegel (45) betätigt.

10. Lager nach Anspruch 8, **dadurch gekennzeichnet, dass** der erste Hebel (31) als Winkelhebel mit zwei Hebelarmen (31a, 31b) ausgebildet ist, wobei an einem der Hebelarme (31a, 31b) der Riegel (45) gebildet ist und der andere Hebelarm (31a, 31b) an die Anschlagvorrichtung anschlägt.

11. Lager nach Anspruch 10, **dadurch gekennzeichnet, dass** eine Federeinrichtung mit dem ersten Hebel (31) verbunden ist, wobei der erste Hebel (31) entgegen der Federkraft der Federeinrichtung (47) bewegbar ist.

12. Lager nach einem der Ansprüche 7 bis 11, **dadurch gekennzeichnet, dass** die Antriebsvorrichtung (23) einen Antriebshebel (27) rotatorisch antreibt, wobei das Zugmittel (29) mit dem Antriebshebel (27) verbunden ist.

13. Lager nach einem der Ansprüche 1 bis 12, **dadurch gekennzeichnet, dass** die Verschlussklappe (17) zumindest teilweise aus einer Glasplatte (21) gebildet ist.

14. Lager nach einem der Ansprüche 1 bis 13, **dadurch gekennzeichnet, dass** eine Sensorvorrichtung die Öffnungsstellung und/oder die Schließstellung der Verschlussklappe (17) sensiert.

## Claims

1. Automatic storage (3) for storing articles,
comprising a storage area with a plurality of storage locations for the articles, the storage locations being operable by a manipulator (7) for storing and removing the articles or being operable by manipulator (7) for removing the articles, the storage area being at least partially enclosed by housing walls (3), an access door (5) being arranged preferably in one of the housing walls (3), a discharge opening (13) being arranged in one of the housing walls (3) or in the access door (5), the discharge opening (13) comprising a closing flap (17) closing the discharge opening (13) in a closing position,
**characterized in that**
in an open position, an upper edge (17b) of the closing flap (17) is aligned with an end position of the manipulator (7) so that an article discharged by the manipulator (7) at its end position falls onto the closing flap (17), wherein the article can be taken from the closing flap (17) through the discharge opening (13) or slides over the closing flap (17) to the discharge opening (13).

2. Storage according to claim 1, **characterized in that** a lock device (43) with a latch (45) is arranged on the closing flap (17), the closing flap (17) being lockable in the closed position via the lock device (43).

3. Storage according to claim 1 or 2, **characterized in that** the closing flap (17) is pivotably supported via a pivot bearing (41).

4. Storage according to claim 3, **characterized in that** an axis of rotation of the pivot bearing (41) is arranged parallel to a lower edge (17a) of the closing flap (17).

5. Storage according to claim 3 or 4, **characterized in that** the rotary bearing comprises a spring-loaded hinge, the closing flap (17) being movable to the open position against a spring force of a spring of the spring-loaded hinge.

6. Storage according to any one of claims 1 to 5, **characterized in that** a drive device (23) moves the closing flap (17) from the closed position to the open position.

7. Storage according to claim 6, **characterized in that** the drive device is connected to the closing flap (17) via a traction means (29).

8. Storage according to claim 7, **characterized in that** a first lever (31) is arranged on the closing flap (17), which is engaged by the traction means (29), the first lever (31) being pivotably supported and comprising a stop device.

9. Storage according to claim 8, **characterized in that** the first lever (31) operates the latch (45).

10. Storage according to claim 8, **characterized in that** the first lever (31) is designed as an angular lever with two lever arms (31a, 31b), the latch (45) being formed on one of the lever arms (31a, 31b) and the other lever arm (31a, 31b) abutting against the stop device.

11. Storage according to claim 10, **characterized in that** a spring means is connected to the first lever (31), the first lever (31) being movable against the spring force of the spring means (47).

12. Storage according to any one of claims 7 to 11, **characterized in that** the drive means (23) rotationally drives a drive lever (27), the traction means (29) being connected to the drive lever (27).

13. Storage according to any one of claims 1 to 12, **characterized in that** the closing flap (17) is formed at least in part by a glass plate (21).

14. Storage according to any one of claims 1 to 13, **characterized in that** a sensor device senses toe open position and/or the closed position of the closing flap (17).

## Revendications

1. Entrepôt automatique (1) destiné à stocker des objets, doté d'une zone de stockage avec plusieurs emplacements de stockage pour les objets, dans lequel les emplacements sont utilisables par un manipulateur (7) pour le stockage et le prélèvement des objets ou sont utilisables par un manipulateur (7) pour le prélèvement des objets, dans lequel la zone de stockage est au moins partiellement entourée par des parois (3), dans lequel une porte d'accès (5) est de préférence disposée dans au moins une des parois (3), dans lequel une ouverture de sortie (13) est disposée dans une des parois (3) ou dans la porte d'accès (5), dans lequel l'ouverture de sortie (13) comporte un clapet obturateur (17), lequel ferme l'ouverture de sortie (13) dans une position de fermeture,
**caractérisé**
**en ce que**, dans une position d'ouverture, le clapet obturateur (17) est orienté avec un bord supérieur (17b) vers une position terminale du manipulateur (7) de sorte qu'un objet distribué par le manipulateur (7) à sa position terminale tombe sur le clapet obturateur (17), dans lequel l'objet peut être enlevé du clapet obturateur (17) par l'ouverture de sortie (13) ou glisse sur le clapet obturateur (17) vers l'ouverture de sortie (13).

2. Entrepôt selon la revendication 1, **caractérisé en ce qu'**un dispositif de fermeture (43) doté d'un loquet (45) est disposé sur le clapet obturateur (17), dans lequel le clapet obturateur (17) peut être verrouillé dans la position de fermeture par le biais du dispositif de fermeture (43).

3. Entrepôt selon la revendication 1 ou 2, **caractérisé en ce que** le clapet obturateur (17) est monté de manière pivotante par le biais d'un palier tournant (41).

4. Entrepôt selon la revendication 3, **caractérisé en ce qu'**un axe de rotation du palier tournant (41) est disposé parallèlement à un bord inférieur (17a) du clapet obturateur (17).

5. Entrepôt selon la revendication 3 ou 4, **caractérisé en ce que** le palier tournant comporte une charnière sollicitée par un ressort, dans lequel le clapet obturateur (17) peut être déplacé dans la position d'ouverture contre une force de ressort d'un ressort de la charnière sollicitée par un ressort.

6. Entrepôt selon l'une des revendications 1 à 5, **caractérisé en ce qu'**un dispositif d'entraînement (23) déplace le clapet obturateur (17) de la position de fermeture à la position d'ouverture.

7. Entrepôt selon la revendication 6, **caractérisé en ce que** le dispositif d'entraînement est relié au clapet obturateur (17) par le biais d'un moyen de traction (29).

8. Entrepôt selon la revendication 7, **caractérisé en ce qu'**un premier levier (31), sur lequel le moyen de traction (29) entre en prise, est disposé sur le clapet obturateur (17), dans lequel le premier levier (31) est monté de manière pivotante et comporte un dispositif de butée.

9. Entrepôt selon la revendication 8, **caractérisé en ce que** le premier levier (31) actionne le loquet (45).

10. Entrepôt selon la revendication 8, **caractérisé en ce que** le premier levier (31) est réalisé comme levier coudé doté de deux bras de levier (31a, 31b), dans lequel le loquet (45) est construit sur un des bras de levier (31a, 31b) et l'autre bras de levier (31a, 31b) bute sur le dispositif de butée.

11. Entrepôt selon la revendication 10, **caractérisé en ce qu'**un dispositif de ressort est relié au premier levier (31), dans lequel le premier levier (31) peut être déplacé contre la force de ressort du dispositif de ressort (47).

12. Entrepôt selon l'une des revendications 7 à 11, **caractérisé en ce que** le dispositif d'entraînement (23) entraîne en rotation un levier d'entraînement (27), dans lequel le moyen de traction (29) est relié au levier d'entraînement (27) .

13. Entrepôt selon l'une des revendications 1 à 12, **caractérisé en ce que** le clapet obturateur (17) est formé au moins en partie d'une plaque de verre (21).

14. Entrepôt selon l'une des revendications 1 à 13, **caractérisé en ce qu'**un dispositif de capteur détecte la position d'ouverture et/ou la position de fermeture du clapet obturateur (17).
